# EUROPÄISCHE PATENTSCHRIFT

(11) **EP 3 931 539 B1**
(45) Veröffentlichungstag und Bekanntmachung des Hinweises auf die Patenterteilung: **03.04.2024**
(21) Anmeldenummer: 20706735.6
(22) Anmeldetag: 25.02.2020
(51) Int. Cl.: G01L 3/10

(54) **DREHMOMENTSENSOREINHEIT MIT EINER MAGNETISCHEN ABSCHIRMUNG**
TORQUE SENSOR UNIT COMPRISING A MAGNETIC SHIELD
UNITÉ DE CAPTEUR DE COUPLE DOTÉE D'UN BLINDAGE MAGNÉTIQUE

(30) Priorität: 01.03.2019 DE 102019105234
(43) Veröffentlichungstag der Anmeldung: 05.01.2022
(73) Patentinhaber: thyssenkrupp Presta AG, 9492 Eschen (LI); thyssenkrupp AG, 45143 Essen (DE)
(72) Erfinder: AYER, Roman, 8610 Uster (CH); KNOLL, Peter, 88131 Lindau (DE); KOVÁCS, Sándor, 2220 Vecsés (HU); SZABO, Peter, 1119 Budapest (HU); TÓTH, Tivadar Kristóf, 2071 Páty (HU)
(74) Vertreter: thyssenkrupp Intellectual Property GmbH
(86) Internationale Anmeldenummer: PCT/EP2020/054904
(87) Internationale Veröffentlichungsnummer: WO 2020/178078

(56) Entgegenhaltungen:
- DE-A1-102017 116 454
- US-B2- 8 087 306

## Beschreibung

Die vorliegende Erfindung betrifft eine Drehmomentsensoreinheit mit den Merkmalen des Oberbegriffs des Anspruchs 1 und eine elektromechanische Hilfskraftlenkung für ein Kraftfahrzeug mit einer solchen Drehmomentsensoreinheit.

Drehmomentsensoren werden in einem Kraftfahrzeug dazu eingesetzt, das von einem Fahrer in das Lenkrad eingeleitete Drehmoment zu messen. Derzeit verwendete Drehmomentsensoren sind magnetische Sensoren, deren Messung sehr leicht durch externe Magnetfelder gestört werden kann. Kraftfahrzeuge werden in Zukunft und zum Teil schon jetzt, vollständig oder teilweise elektrisch betrieben, was zu hohen externen Feldbeeinflussungsmessungen durch hochstromführende Kabel führen kann, die sich häufig in der Nähe des Lenksystems befinden. Das Erdmagnetfeld kann ebenfalls störenden Einfluss auf die Sensoren haben.

Aus dem Stand der Technik ist eine Reihe an Drehmomentsensoren bekannt, die eine magnetische Abschirmung aufweisen.

Die Patentschrift US 7,021,161 B2 offenbart einen Lenkwinkelsensor, der ein mit einer oberen Lenkwelle verbundenes erstes Zahnrad aufweist, das in Eingriff mit einem zweiten kleineren Zahnrad steht, wobei das kleinere Zahnrad von einer Abschirmung umgeben ist, die eine Aussparung für das erste Zahnrad aufweist. Die Abschirmung begrenzt das magnetische Feld des Sensors des zweiten Zahnrades.

Aus den Offenlegungsschriften EP 3 276 317 A1, EP 3 276 318 A1 und EP 3 239 678 A1 sind Drehmomentsensoreinheiten mit einer im Querschnitt C-förmigen, magnetischen Abschirmung bekannt, die auf der unteren Lenkwelle angeordnete Magnetflussleiter umfangseitig umgibt.

Des Weiteren ist aus der DE 10 2017 116 454 A1 eine Drehmomentsensoreinheit mit einer magnetischen Abschirmung bekannt, wobei die magnetische Abschirmung durch ein Elektronikmodulgehäuse aus einem mit magnetisch abschirmend wirkenden Partikeln gefüllten Kunststoff hergestellt ist. Zudem werden flächigen Abschirmelemente vorgeschlagen, die sich jeweils in radialer Richtung nach innen weg von einem Gehäusedeckel erstrecken und in radialer Richtung nach innen über einen unteren Gehäuseabschnitt hinausragen. Zusätzlich kann eine äußere Gehäuseschale vorgesehen werden, welche ebenfalls magnetisch abschirmend.

Es ist Aufgabe der vorliegenden Erfindung eine Drehmomentsensoreinheit anzugeben, die einen verringerten Einfluss eines vorhandenen externen magnetischen Störfeldes auf die Ermittlung des Drehmomentwertes hat und damit einhergehend eine erhöhte Genauigkeit aufweist.

Diese Aufgabe wird von einer Drehmomentsensoreinheit mit den Merkmalen des Anspruchs 1 und von einer elektromechanischen Hilfskraftlenkung für ein Kraftfahrzeug mit einer solchen Drehmomentsensoreinheit gelöst. Vorteilhafte Weiterbildungen ergeben sich aus den Unteransprüchen.

Demnach ist eine Drehmomentsensoreinheit vorgesehen, umfassend:
- einen drehfest mit einer ersten Teilwelle verbindbaren Ringmagneten, der zu einer Längsachse konzentrisch angeordnet ist,
- zwei mit der zweiten Teilwelle verbindbare erste Magnetflussleiter, die in einem von dem Ringmagneten ausgehenden magnetischen Feld angeordnet sind und die die magnetischen Flüsse leiten,
- eine raumfeste Sensoreinheit mit zwei zweiten Magnetflussleitern und einem auf einer Leiterplatte angeordneten Magnetsensor, die in einem Sensorgehäuse der Sensoreinheit untergebracht sind, wobei die Sensoreinheit dazu eingerichtet ist, eine Drehwinkeländerung zwischen den Teilwellen durch Messung der zwischen den zwei ersten Magnetflussleitern erzeugten magnetischen Flussdichte zu detektieren,
- ein zweites Gehäuse, dass den Ringmagneten, die zwei ersten Magnetflussleiter und die Sensoreinheit umgibt, wobei die Drehmomentsensoreinheit eine magnetische Abschirmung umfasst, die die Sensoreinheit zumindest teilweise umfangseitig umgibt und die zwischen einem das zweite Gehäuse verschließenden Gehäusedeckel und dem zweiten Gehäuse angeordnet ist.

Die magnetische Abschirmung schirmt die Sensoreinheit vor externen magnetischen Störfeldern ab, wodurch die Signalqualität deutlich verbessert werden kann. Der Gehäusedeckel ist bevorzugt aus Stahl gebildet. Die Abschirmung wird vorzugsweise zwischen Gehäusedeckel und zweitem Gehäuse eingeklemmt.

Vorzugsweise weist die magnetische Abschirmung wenigstens eine Auflagefläche auf, die mit einer Führung in dem zweiten Gehäuse zusammen wirkt. Dies ermöglicht ein einfaches Einsetzen der Abschirmung in dem zweiten Gehäuse.

Es kann vorgesehen sein, dass auch der Ringmagnet umfangsseitig von der magnetischen Abschirmung zumindest teilweise umgeben ist.

Gemäß der beanspruchten Erfindung, weist die magnetische Abschirmung zwei Schenkel auf, die jeweils erste und zweite Seiten aufweisen, wobei die zweiten Seiten sich parallel zur Längsachse erstrecken und die ersten Seiten etwa dazu senkrecht angeordnet sind. Die Schenkel sind bevorzugt rechteckig.

Um die Montage zu vereinfachen, sind die Schenkel ausschließlich über ihre ersten oder ihre zweiten Seiten miteinander verbunden, Die Schenkel der Abschirmung erstrecken sich dabei bevorzugt jeweils in einer Ebene parallel zur Längsachse.

Es kann vorgesehen sein, dass die magnetische Abschirmung eine Öffnung zur Durchführung von einer Datenleitung und/oder einer Stromversorgung des Sensorelementes aufweist.

Vorzugsweise ist die Sensoreinheit zu dem Ringmagneten in Radialrichtung zur Längsachse beabstandet angeordnet.

In einer bevorzugten Ausführungsform ist die Abschirmung aus einem Metallblech gefertigt. Das Metallblech ist zur Ausbildung der Abschirmung vorzugsweise gestanzt und gebogen. Es kann auch vorgesehen sein, die Abschirmung aus einem kaltumgeformten Metall zu bilden.

Weiterhin ist ein elektromechanisches Lenksystem für ein Kraftfahrzeug umfassend ein mit einer zweiten Teilwelle verbundenes Lenkritzel, welches mit einer in einem dritten Gehäuse entlang einer Längsachse verschieblich gelagerten Zahnstange zur Lenkung von Rädern in Eingriff steht, wenigstens einen Elektromotor zur Lenkkraftunterstützung, vorgesehen, wobei das Lenksystem weiterhin eine zuvor beschriebene Drehmomentsensoreinheit umfasst, die zwischen einer mit dem Lenkrad verbundenen ersten Teilwelle und der zweiten Teilwelle angeordnet ist und ein vom Fahrer in das Lenkrad eingebrachtes Drehmoment zur Steuerung einer Lenkkraftunterstützung erfasst.

Eine bevorzugte Ausführungsform der Erfindung wird nachfolgend anhand der Zeichnungen näher erläutert. Gleiche bzw. funktionsgleiche Bauteile sind dabei figurübergreifend mit denselben Bezugszeichen versehen. Es zeigen:
- Figur 1:: eine räumliche Ansicht einer Drehmomentsensoreinheit,
- Figur 2:: eine seitliche Ansicht der vollständig montierten Drehmomentsensoreinheit in Richtung der Längsachse der Welle,
- Figur 3:: einen Längsschnitt durch die Drehmomentsensoreinheit entlang der in Figur 2 gezeigten Linie A-A,
- Figur 4:: eine räumliche Ansicht einer Abschirmung,
- Figur 5:: mehrere Ansichten der Abschirmung der Figur 4,
- Figur 6:: eine räumliche Ansicht einer weiteren Abschirmung, sowie
- Figur 7:: mehrere Ansichten der Abschirmung der Figur 6.

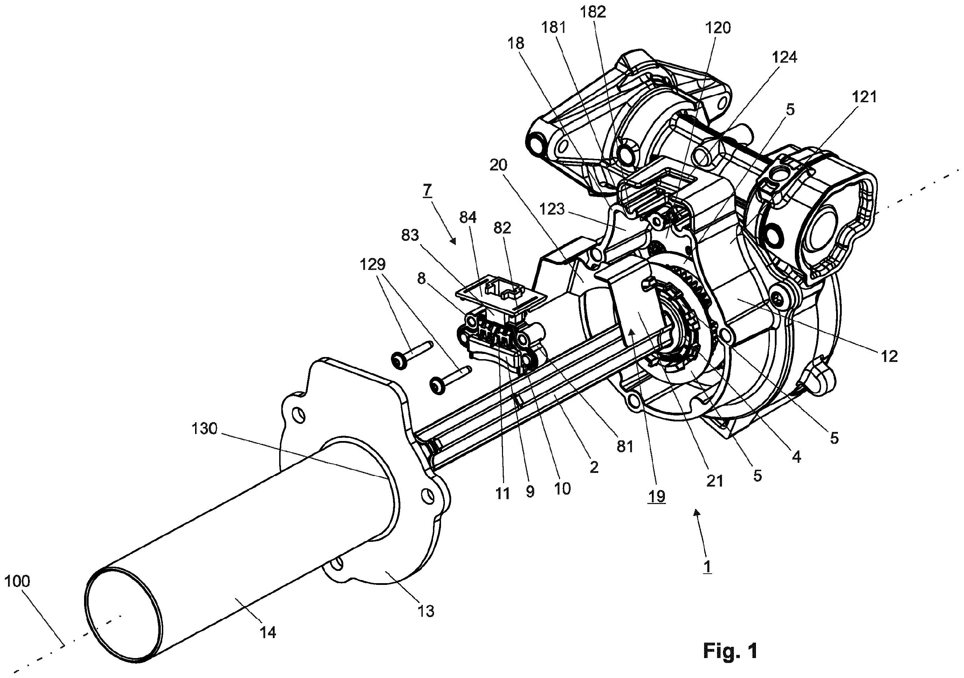

In Figur 1 ist eine Drehmomentsensoreinheit 1 dargestellt, die eine Verdrehung einer oberen Lenkwelle 2 gegenüber einer nicht dargestellten unteren Lenkwelle als ein Maß des an der oberen Lenkwelle oder eines mit der oberen Lenkwelle verbundenen Lenkrades von einem Fahrer manuell ausgeübten Drehmomentes misst. Die obere Lenkwelle 2 und die untere Lenkwelle sind drehelastisch über einen nicht gezeigten Drehstab miteinander gekoppelt. Eine Drehmomentsensoreinheit 1 weist einen Drehwinkelsensor auf, der auch als Drehmomentsensor bezeichnet wird. In Abhängigkeit des von der Drehmomentsensoreinheit 1 gemessen Drehmoments stellt eine Servoeinheit eine Lenkunterstützung für den Fahrer bereit.

Die Drehmomentsensoreinheit 1 weist einen drehfest mit der oberen Lenkwelle 2 verbunden Ringmagneten (Permanentmagneten) 4 mit einer Vielzahl an Polen auf. Ein Satz von Magnetflussleitern 5, der an der unteren Lenkwelle befestigt ist, ist in einem von dem Vielpolmagnet 4 erzeugten Magnetfeld angeordnet. Jeder der Magnetflussleiter 5 ist aus einem weichmagnetischen Material hergestellt und weist eine Mehrzahl von Klauenpolen auf, die in Umfangsrichtung äquidistant angeordnet sind. Die beiden Magnetflussleiter 5 sind so angeordnet, dass ihre Klauenpole ineinandergreifen. Der Vielpolmagnet 4 und die zusammengefügten Magnetflussleiter 5 sind so angeordnet, dass die Mitte jedes Klauenpols der Magnetflussleiter 5 mit einer Magnetgrenzlinie (d. h. einer Grenze zwischen einem N-Pol und einem S-Pol) überein stimmt, um einen neutralen Punkt zu erhalten, bei dem das Ausgangssignal (die Ausgangsspannung) des Magnetfeldsensors Null wird, wenn der Drehstab nicht tordiert wird (d. h. wenn keine Lenkkraft zwischen der oberen Lenkwelle und der unteren Lenkwelle übertragen wird).

Die Magnetflussleiter 5 leiten bzw. "sammeln" die magnetischen Flüsse. Eine raumfeste Sensoreinheit 7 erfasst, die in einem Luftspalt zwischen den in Axialrichtung gegenüberliegenden Magnetflussleitern 5 erzeugte magnetische Flussdichte.

Die Sensoreinheit 7 weist ein Sensorgehäuse 8, im Folgenden auch erstes Gehäuse genannt, auf und darin angeordnet einen Magnetflussleiter 9 und einen auf einer Leiterplatte 10 angeordneten Magnetsensor 11. Die Flussleiter 5,9 dienen zur Konzentrierung des magnetischen Flusses an dem Magnetsensor 11. Der Magnetsensor 11 detektiert die Verdrehung der mit Magnetring 4 verbunden oberen Lenkwelle 2 gegenüber der mit den Magnetflussleitern 5 verbundenen unteren Lenkwelle. Das erste Gehäuse 8 der Sensoreinheit 7 wird bei der Montage in ein zweites Gehäuse 12 der Drehmomentsensoreinheit 1 eingesetzt.

Das zweite Gehäuse 12 der Drehmomentsensoreinheit umgibt im montierten Zustand den Ringmagneten 4, den Satz Magnetflussleiter 5 und die Sensoreinheit 7. Das zweite Gehäuse 12 der Drehmomentsensoreinheit weist eine als Boden fungierende Grundfläche 120 auf, auf die eine als Rand dienende Außenwand 121 aufgesetzt ist, die im Wesentlichen senkrecht auf dem Boden 120 angeordnet ist. Die Außenwand 121 ist an dem Boden 120 bevorzugt angeschweißt. Bevorzugt sind die Außenwand 121 und der Boden 120 in einer Stanzoperation einteilig ausgebildet. Alternativ ist das Teil in einem Gussverfahren dargestellt, bevorzugt Aluminiumdruckguss. Die Außenwand 121 umschließt die gesamte Drehmomentsensoreinheit 1 umfangseitig. Das zweite Gehäuse 12 weist auf der bodenfernen Seite eine Öffnung 123 auf. Diese Öffnung 123 öffnet das Gehäuse 12 zur oberen Lenkwelle 2 hin. Die Öffnung 123 wird von einem Gehäusedeckel 13 abgedeckt. Der Gehäusedeckel 13 weist eine Ausnehmung 130 auf, die von der oberen Lenkwelle 2 im eingebauten Zustand durchsetzt ist. Der Gehäusedeckel 13 ist mit einem inneren Mantelrohr 14 einer Lenksäule verbunden, bevorzugt verschweißt. Das innere Mantelrohr 14 ist in die Ausnehmung 130 eingesetzt. Das innere Mantelrohr 14 ist Teil einer verstellbaren Lenksäule. Es ist von einem nicht dargestellten äußeren Mantelrohr umgeben, und die beiden Mantelrohre sind gegeneinander teleskopierbar ausgeführt.

Das zweite Gehäuse 12 weist eine Gehäuseöffnung 124 im Rand 121, im Bereich des Sensorelementes 7 auf. Durch die Gehäuseöffnung 124 kann das Sensorelement 7 mit einer Datenleitung und mit einer Stromversorgung verbunden werden.

Das Sensorgehäuse 8 wird mittels Schrauben 129 an dem zweiten Gehäuse 12 befestigt. Der Gehäusedeckel 13 wird ebenfalls an dem zweiten Gehäuse 12 festgeschraubt.

Die Sensoreinheit 7 ist von dem ersten Gehäuse 8 umgeben, dass einen ersten Bereich 81 aufweist, in dem der Flussleiter 9, die Leiterplatte 10 und der Magnetsensor 11 untergebracht sind. In einem zweiten Bereich 82, der sich an den ersten Bereich 81 anschließt, ist das erste Gehäuse 8 im Längsschnitt T-förmig ausgestaltet. Zur Bildung der T-Form weist das erste Gehäuse 8 einen Hals 83 auf, der sich im montierten Zustand der Sensoreinheit 7 in Radialrichtung der Längsachse 100 der Drehmomentsensoreinheit erstreckt und an den sich ein querliegender Steg 84 anschließt. Der querliegende Steg 84 ist plattenförmig und liegt im eingebauten Zustand auf beiden Seiten, jeweils auf einem nach innen gerichteten Vorsprung 18 des Randes 121 des zweiten Gehäuses 12 auf. Je ein Vorsprung weist zwei Auflageflächen 181,182 auf, die eine Art Führung für das Einbringen der Sensoreinheit 7 in das zweite Gehäuse 12 bilden.

Das zweite Gehäuse 12 ist aus Aluminium gefertigt und ist daher nicht geeignet, magnetische Felder abzuschirmen.

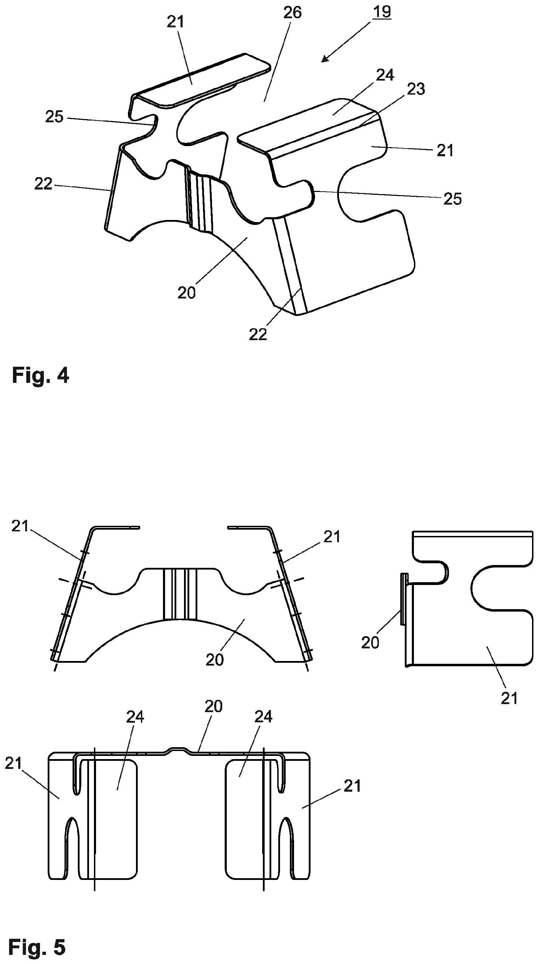

Es ist eine zusätzliche Abschirmung 19 notwendig, die das Sensorgehäuse 8 zumindest teilweise umgibt und die mit dem Sensorgehäuse 8 in dem zweiten Gehäuse 12 der Drehmomentsensoreinheit untergebracht ist. Diese Abschirmung 19 ist aus einem magnetisch leitenden Material gebildet. Besonders geeignet sind weichmagnetische Werkstoffe mit hoher Permeabilität, wie Nickel-Eisen-Legierungen oder Eisen-Silizium-Legierungen. Die Abschirmung 19 weist zwei über eine Rückseite 20 verbundene und im Wesentlichen rechteckige Schenkel 21 auf. Sie ist im Detail in den Figuren 4 bis 6 dargestellt. Die beiden Schenkel 21 gehen im Wesentlichen senkrecht von der Rückseite 20 ab, die an einer der ersten Seiten der Schenkel 22 angreift, die sich in einer Ebene senkrecht zur Längsachse 100 erstrecken. Auf der sensorfernen Seite weisen die Schenkel 21 an einer der zweiten Seiten 23 jeweils eine nach innen gerichtete Abkantung 24 auf. Die Schenkel 22 weisen jeweils eine Ausnehmung 25 auf, die sich parallel zur Längsachse der Wellen 100 erstreckt, die als Führung zum Aufschieben der Abschirmung auf Vorsprünge dient, die auf dem Boden 120 des zweite Gehäuses 12 angeordnet sind. Die Vorsprünge liegen zwischen der Welle und den nach innen gerichteten Vorsprüngen 18. Die gesamte Abschirmung 19 liegt unterhalb der Vorsprünge 18. Die Schenkel 21 schirmen die gesamte Sensoreinheit 7 zur Seite hin ab. Zwischen den Abkantungen 24 ist eine Öffnung 26 ausgebildet, durch die die Anschlüsse für die Sensoreinheit 7 geführt werden können. Auf der getriebefernen Seite ist die Abschirmung 19 offen. In dieser Ausführungsform wird bei der Montage der Drehmomentsensoreinheit 1 als erstes die Abschirmung 19 und dann die Sensoreinheit 7 in das zweite Gehäuse 12 eingesetzt. Der Gehäusedeckel 13 schließt in einem nächsten Schritt die Abschirmung 19 zur getriebefernen Seite hin ab. Die Abschirmung 19 wird so zwischen das zweite Gehäuse 12 und Gehäusedeckel 13 bei der Montage geklemmt und in der Lage fixiert. Die Abschirmung 19 und der Gehäusedeckel 13 bilden eine geschlossene Box aus, die magnetische Störfelder abschirmt. Der Gehäusedeckel 13 ist bevorzugt aus Stahl gefertigt.

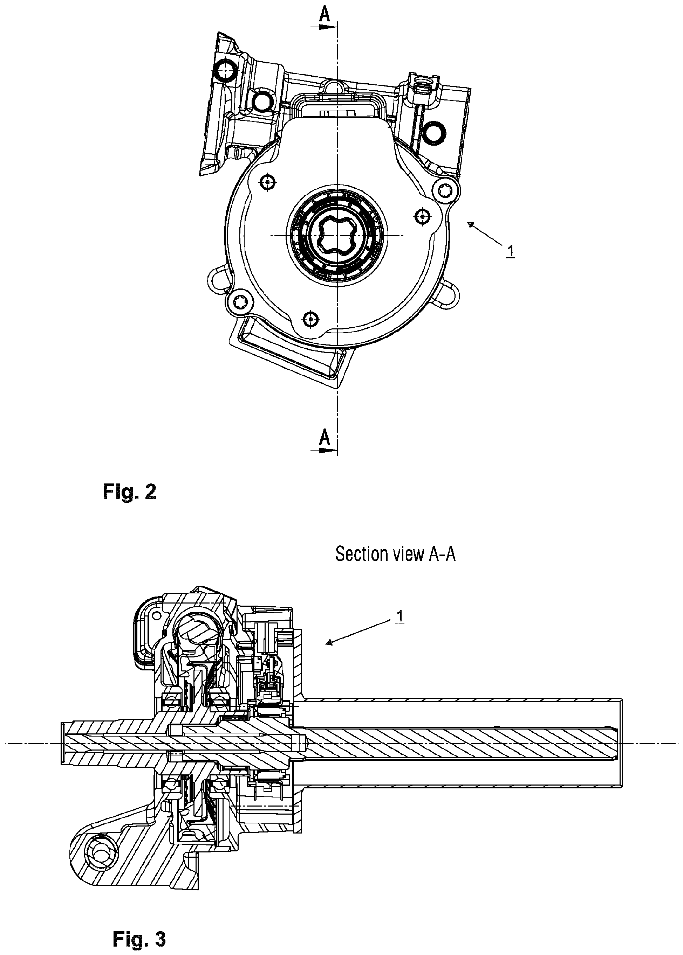

Die Figuren 2 und 3 zeigen die vollständig montierte Drehmomentsensoreinheit 1. In einer anderen Ausführungsform kann vorgesehen sein, dass die beiden Schenkel über ihre zweiten Seiten, die sich parallel zur Längsachse erstrecken, verbunden sind. Die Verbindungwand liegt in diesem Fall auf der ringmagnetfernen Seite. Sie weist eine Ausnehmung auf, die den Hals der Sensoreinheit zumindest teilweise umschließt. In diesem Fall wird bei der Montage als erstes die Sensoreinheit und dann die Abschirmung in das zweite Gehäuse eingebracht. Die Verbindungswand liegt im eingebauten Zustand zwischen den Vorsprüngen des zweiten Gehäuses und dem ersten Bereich des Sensorgehäuses.

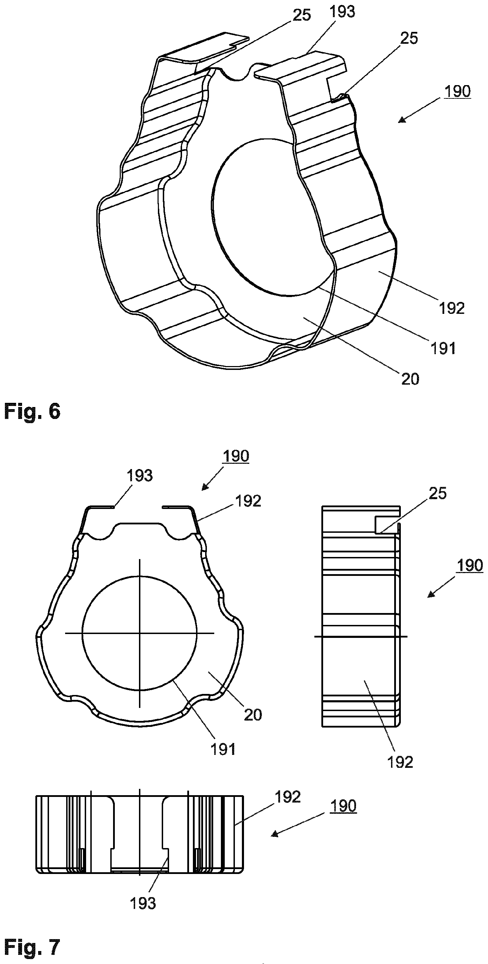

Die Figuren 6 und 7 zeigen eine weitere Ausführungsform einer Abschirmung 190, die das Sensorgehäuse im eingebauten Zustand umfangseitig bis auf eine kleine Unterbrechung 193 zur Durchführung des Halses des ersten Gehäuses vollständig umgibt. Die Rückseite 20 der Abschirmung 190 weist eine kreisrunde Öffnung 191 zur Durchführung der Welle auf. Von der Umfangsseite der Rückseite 20 erstreckt sich etwa senkrecht ein Rand 192, der in einem Bereich zur Durchführung des Halses des ersten Gehäuses die Unterbrechung 193 aufweist. Die Abschirmung 190 ist so dimensioniert, dass sie die Magnetflussleiter und den Ringmagneten umfangseitig umgibt. Die Abschirmung 190 weist Ausnehmung 25 in der Rückseite 20 und in dem Rand 192 auf, die sich parallel zur Längsachse der Welle erstreckt, die als Führung zum Aufschieben der Abschirmung auf Vorsprünge dienen, die auf dem Boden des zweiten Gehäuses angeordnet sind. Wie bereits zuvor beschrieben, wird auch die Abschirmung 190 zwischen das zweite Gehäuse und den Gehäusedeckel bei der Montage geklemmt. Der Gehäusedeckel überdeckt dabei den Rand 192 und liegt auf dessen Stirnseite auf.

## Patentansprüche

1. Drehmomentsensoreinheit (1) umfassend:
- einen drehfest mit einer ersten Teilwelle (2) verbindbaren Ringmagneten (4), der zu einer Längsachse (100) konzentrisch angeordnet ist,
- zwei mit einer zweiten Teilwelle verbindbare erste Magnetflussleiter (5), das in einem von dem Ringmagneten (4) ausgehenden magnetischen Feld angeordnet ist und die die magnetischen Flüsse leiten,
- eine raumfeste Sensoreinheit (7) mit zwei zweiten Magnetflussleitern (9) und einem auf einer Leiterplatte (10) angeordneten Magnetsensor (11), die in einem Sensorgehäuse (8) der Sensoreinheit (7) untergebracht sind, wobei die Sensoreinheit (7) dazu eingerichtet ist, eine Drehwinkeländerung zwischen den Teilwellen (2) durch Messung der zwischen den zwei ersten Magnetflussleitern (5) erzeugten magnetischen Flussdichte zu detektieren,
- ein zweites Gehäuse (12), dass den Ringmagneten (4), die zwei ersten Magnetflussleiter (5) und die Sensoreinheit (7) umgibt, **dadurch gekennzeichnet, dass** die Drehmomentsensoreinheit eine magnetische Abschirmung (19) umfasst, die die Sensoreinheit (7) zumindest teilweise umfangseitig zu der Längsachse (100) umgibt und die in Richtung der Längsachse (100) zwischen einem das zweite Gehäuse (12) verschließenden Gehäusedeckel (13) und dem zweiten Gehäuse (12) angeordnet ist,
wobei die magnetische Abschirmung (19) zwei Schenkel (21) aufweist, die jeweils erste und zweite Seiten (22,23) aufweisen,
wobei die zweiten Seiten (23) sich parallel zur Längsachse (100) erstrecken und die ersten Seiten (22) dazu senkrecht angeordnet sind;
wobei die Schenkel (21) ausschließlich über ihre ersten oder ihre zweiten Seiten (22,23) miteinander verbunden sind.

2. Drehmomentsensoreinheit nach Anspruch 1, **dadurch gekennzeichnet, dass** die magnetische Abschirmung (19) wenigstens eine Auflagefläche aufweist, die mit einer Führung in dem zweiten Gehäuse (12) zusammen wirkt.

3. Drehmomentsensoreinheit nach Anspruch 1 oder 2, **dadurch gekennzeichnet, dass** die magnetische Abschirmung (19) das Sensorgehäuse (8) in wenigstens einem ringmagnetfernen Bereich der Außenseite abschirmt.

4. Drehmomentsensoreinheit nach einem der vorhergehenden Ansprüche, **dadurch gekennzeichnet, dass** die magnetische Abschirmung (19) mittels des Gehäusedeckels (13) in das zweite Gehäuse (12) eingeklemmt ist.

5. Drehmomentsensoreinheit nach einem der vorhergehenden Ansprüche, **dadurch gekennzeichnet, dass** die magnetische Abschirmung (19) eine Öffnung zur Durchführung von einer Datenleitung und/oder einer Stromversorgung des Sensorelementes (7) aufweist.

6. Drehmomentsensoreinheit nach einem der vorhergehenden Ansprüche, **dadurch gekennzeichnet, dass** die Sensoreinheit (7) zu dem Ringmagneten (4) in Radialrichtung zur Längsachse (100) beabstandet angeordnet ist.

7. Drehmomentsensoreinheit nach einem der vorhergehenden Ansprüche, **dadurch gekennzeichnet, dass** die Abschirmung (19) aus einem Metallblech gefertigt ist.

8. Drehmomentsensoreinheit nach Anspruch 7, **dadurch gekennzeichnet, dass** das Metallblech gestanzt und gebogen ist.

9. Drehmomentsensoreinheit nach einem der vorhergehenden Ansprüche 1 bis 6, **dadurch gekennzeichnet, dass** die Abschirmung (19) aus einem kaltumgeformten Metall gebildet ist.

10. Elektromechanisches Lenksystem für ein Kraftfahrzeug umfassend ein mit einer zweiten Teilwelle verbundenes Lenkritzel, welches mit einer in einem dritten Gehäuse entlang einer Längsachse verschieblich gelagerten Zahnstange zur Lenkung von Rädern in Eingriff steht, wenigstens einen Elektromotor zur Lenkkraftunterstützung, eine Drehmomentsensoreinheit (1) gemäß einem der vorhergehenden Ansprüche, die zwischen einer mit dem Lenkrad verbundenen ersten Teilwelle (2) und der zweiten Teilwelle angeordnet ist und ein vom Fahrer in das Lenkrad eingebrachtes Drehmoment erfasst.

## Claims

1. A torque sensor unit (1), comprising:
- a ring magnet (4) which can be connected in a rotationally fixed manner to a first partial shaft (2) and is arranged concentrically in relation to a longitudinal axis (100),
- two first magnetic flux conductors (5) which can be connected to a second partial shaft, is arranged in a magnetic field emanating from the ring magnet (4) and conduct the magnetic fluxes,
- a spatially fixed sensor unit (7) having two second magnetic flux conductors (9) and a magnetic sensor (11), which is arranged on a printed circuit board (10), which are accommodated in a sensor housing (8) of the sensor unit (7), wherein the sensor unit (7) is designed to detect a change in the rotation angle between the partial shafts (2) by measuring the magnetic flux density that is produced between the two first magnetic flux conductors (5),
- a second housing (12) which surrounds the ring magnet (4), the two first magnetic flux conductors (5) and the sensor unit (7), **characterized in that** the torque sensor unit comprises a magnetic shield (19) which surrounds the sensor unit (7) at least partially circumferentially in relation to the longitudinal axis (100) and is arranged between a housing cover (13), which closes the second housing (12), and the second housing (12) in the direction of the longitudinal axis (100),
wherein the magnetic shield (19) has two limbs (21) which each have first and second sides (22, 23), wherein the second side (23) extend parallel to the longitudinal axis (100) and the first sides (22) are arranged approximately perpendicular thereto; wherein the limbs (21) are connected to one another exclusively by way of their first or their second sides (22, 23).

2. The torque sensor unit as claimed in claim 1, **characterized in that** the magnetic shield (19) has at least one supporting surface which interacts with a guide in the second housing (12).

3. The torque sensor unit as claimed in claim 1 or 2, **characterized in that** the magnetic shield (19) shields the sensor housing (8) in at least one region of the outer side that is remote from the ring magnet.

4. The torque sensor unit as claimed in one of the preceding claims, **characterized in that** the magnetic shield (19) is clamped into the second housing (12) by means of the housing cover (13).

5. The torque sensor unit as claimed in one of the preceding claims, **characterized in that** the magnetic shield (19) has an opening for a data line and/or a power supply of the sensor element (7) to pass through.

6. The torque sensor unit as claimed in one of the preceding claims, **characterized in that** the sensor unit (7) is arranged at a distance from the ring magnet (4) in the radial direction in relation to the longitudinal axis (100).

7. The torque sensor unit as claimed in one of the preceding claims, **characterized in that** the shield (19) is manufactured from a metal sheet.

8. The torque sensor unit as claimed in claim 7, **characterized in that** the metal sheet is punched and bent.

9. The torque sensor unit as claimed in one of the preceding claims 1 to 6, **characterized in that** the shield (19) is formed from a cold-worked metal.

10. An electromechanical steering system for a motor vehicle, comprising a steering pinion which is connected to a second partial shaft and engages with a toothed rack, which is mounted in a third housing such that it can be displaced along a longitudinal axis, for steering wheels, at least one electric motor for steering force assistance, a torque sensor unit (1) as claimed in one of the preceding claims which is arranged between a first partial shaft (2), which is connected to the steering wheel, and the second partial shaft and detects a torque that is introduced into the steering wheel by the driver.

## Revendications

1. Unité de capteur de couple (1), comprenant :
- un aimant annulaire (4) qui peut être relié de manière fixe en rotation à un premier arbre partiel (2) et qui est disposé concentriquement par rapport à un axe longitudinal (100),
- deux premiers conducteurs de flux magnétique (5), qui peuvent être reliés à un deuxième arbre partiel, sont disposés dans un champ magnétique émanant de l'aimant annulaire (4) et conduisent les flux magnétiques,
- une unité de détection (7) fixe dans l'espace comportant deux seconds conducteurs de flux magnétique (9) et un capteur magnétique (11), disposé sur une carte de circuit imprimé (10), qui sont logés dans un boîtier (8) de détection de l'unité de détection (7), l'unité de détection (7) étant conçue pour détecter un changement de l'angle de rotation entre les arbres partiels (2) en mesurant la densité de flux magnétique produite entre les deux premiers conducteurs de flux magnétique (5),
- un deuxième boîtier (12) qui entoure l'aimant annulaire (4), les deux premiers conducteurs de flux magnétique (5) et l'unité de capteur (7), **caractérisé en ce que** l'unité de capteur de couple comprend un blindage magnétique (19) qui entoure l'unité de capteur (7) au moins partiellement sur la circonférence par rapport à l'axe longitudinal (100) et est disposé entre un couvercle (13) de boîtier, qui ferme le deuxième boîtier (12), et le deuxième boîtier (12) dans la direction de l'axe longitudinal (100),
dans lequel le bouclier magnétique (19) a deux branches (21) qui ont chacune un premier et un deuxième côté (22, 23), dans lequel le deuxième côté (23) s'étend parallèlement à l'axe longitudinal (100) et les premiers côtés (22) sont disposés approximativement perpendiculairement à celui-ci ;
les membres (21) sont reliés l'un à l'autre exclusivement par leur premier ou leur deuxième côté (22, 23).

2. L'unité de capteur de couple selon la revendication 1, **caractérisé par le fait que** le bouclier magnétique (19) possède au moins une surface d'appui qui interagit avec un guide dans le second boîtier (12).

3. L'unité de capteur de couple selon la revendication 1 ou 2, **caractérisé par le fait que** le bouclier magnétique (19) protège le boîtier du capteur (8) dans au moins une région de la face extérieure qui est éloignée de l'aimant annulaire.

4. L'unité de capteur de couple selon l'une des revendications précédentes, **caractérisé par le fait que** le bouclier magnétique (19) est fixé dans le second boîtier (12) au moyen du couvercle du boîtier (13).

5. L'unité de capteur de couple selon l'une des revendications précédentes, **caractérisée par le fait que** le bouclier magnétique (19) présente une ouverture permettant le passage d'une ligne de données et/ou d'une alimentation électrique de l'élément de capteur (7).

6. L'unité de capteur de couple selon l'une des revendications précédentes, **caractérisée par le fait que** l'unité de capteur (7) est disposée à une certaine distance de l'aimant annulaire (4) dans la direction radiale par rapport à l'axe longitudinal (100).

7. L'unité de capteur de couple selon l'une des revendications précédentes, **caractérisé par le fait que** le bouclier (19) est fabriqué à partir d'une feuille de métal.

8. L'unité de capteur de couple selon la revendication 7, **caractérisé par le fait que** la tôle est perforée et pliée.

9. L'unité de capteur de couple selon l'une des revendications précédentes 1 à 6 , **caractérisé par le fait que** le bouclier (19) est formé d'un métal écroui.

10. Système de direction électromécanique pour véhicule automobile, comprenant un pignon de direction relié à un deuxième arbre partiel et en prise avec une crémaillère montée dans un troisième boîtier de manière à pouvoir être déplacée le long d'un axe longitudinal, pour les roues directrices, au moins un moteur électrique pour l'assistance à la force de direction, une unité de capteur de couple (1) tel que revendiqué dans l'une des revendications précédentes, disposé entre un premier arbre partiel (2) relié au volant et le deuxième arbre partiel, et détectant un couple introduit dans le volant par le conducteur.
